# EUROPEAN PATENT APPLICATION

(11) **EP 4 510 533 A1**
(43) Date of publication of application: **19.02.2025**
(21) Application number: 23811093.6
(22) Date of filing: 24.05.2023
(51) Int. Cl.: H04L 65/1016

(54) **SERVICE IMPLEMENTATION METHOD AND APPARATUS, COMMUNICATION DEVICE, AND STORAGE MEDIUM**

(30) Priority: 25.05.2022 CN 202210579043
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHANG, Xin, Beijing 100032 (CN)
(74) Representative: Murgitroyd & Company
(86) International application number: PCT/CN2023/096017
(87) International publication number: WO 2023/227023

(57) **Abstract**

A service implementation method and apparatus, a communication device, and a storage medium are disclosed. The method includes: A first network device performs a DC negotiation with a first terminal, and establishes a first DC based on a DC negotiation process, where the first DC is used for transmission of interaction data between the first terminal and a second network device.

## Description

### CROSS-REFERENCE TO RELATED APPLICATION

The present application claims a priority to Chinese Patent Application No. 202210579043.4 filed in China on May 25, 2022, a disclosure of which is incorporated in its entirety by reference herein.

### TECHNICAL FIELD

The present disclosure relates to the field of communication technology, in particular to a service implementation method and apparatus, a communication device, and a storage medium.

### BACKGROUND

In a conventional ring back tone service, in a process of playing a ring back tone, a user may operate keys to implement some simple interaction based on a Double Tone Multiple Frequency (DTMF) technology. However, this interaction manner leads to poor user experience.

### SUMMARY

To resolve the technical problems that exist in the related art, the present disclosure provides in some embodiments a service implementation method and apparatus, a communication device, and a storage medium.

To achieve the foregoing objective, the technical solution in the embodiments of the present disclosure is implemented as follows.

According to a first aspect, the present disclosure provides in some embodiments a service implementation method, applied to a first network device, including:
performing, by the first network device, a data channel (DC) negotiation with a first terminal, and establishing a first DC based on a DC negotiation process, where the first DC is used for transmission of interaction data between the first terminal and a second network device.

In the foregoing solution, the performing, by the first network device, the DC negotiation with the first terminal includes:
performing, by the first network device, a negotiation of a DC between the first terminal and the second network device with the first terminal; or
performing, by the first network device, a negotiation of a DC between the first terminal and a third network device with the first terminal.

In the foregoing solution, the method further includes: receiving, by the first network device, first information sent by the second network device, where the first information is used for subscribing to a call event; and
sending, by the first network device when receiving the call event, the call event to the second network device, and receiving a first message sent by the second network device, where the first message is used for indicating the first network device to negotiate a DC channel; and
the performing, by the first network device, the DC negotiation with the first terminal includes:
   triggering, by the first network device, the DC negotiation with the first terminal through the first message.

In the foregoing solution, the performing, by the first network device, the DC negotiation with the first terminal includes:
sending, by the first network device, a first request used for negotiating a DC to the first terminal, where the first request at least includes a DC parameter; and
receiving, by the first network device, a first response that is sent by the first terminal and corresponds to the first request.

In the foregoing solution, the method further includes: associating, by the first network device, the first DC and the second network device through label information in a DC negotiation parameter.

According to a second aspect, the present disclosure further provides in some embodiments a service implementation method, applied to a first terminal, including:
performing, by the first terminal, a DC negotiation with a first network device, and establishing a first DC through the DC negotiation; and
performing interaction data transmission between the first terminal and a second network device at least based on the first DC.

In the foregoing solution, the method further includes: establishing, by the first terminal, a second DC with a third network device, and obtaining a first application through the second DC.

In the foregoing solution, the method further includes: presenting, by the first terminal, an interaction interface through the first application and/or the interaction data in the first DC.

In the foregoing solution, the method further includes: associating, by the first terminal, the first DC and the first application.

In the foregoing solution, the method further includes: displaying, by the first terminal, the interaction data through the first application based on an association relationship between the first DC and the first application.

In the foregoing solution, the method further includes: performing, by the first terminal, media resource negotiation with the second network device, and establishing a first channel and/or a second channel between the first terminal and the second network device through the media resource negotiation, where the first channel and/or the second channel is used for transmission of audio data and/or video data.

In the foregoing solution, the performing, by the first terminal, the DC negotiation with the first network device includes:
performing, by the first terminal, a negotiation of a DC between the first terminal and the second network device with the first network device; or
performing, by the first terminal, a negotiation of a DC between the first terminal and a third network device with the first network device.

In the foregoing solution, the performing, by the first terminal, the DC negotiation with the first network device includes:
receiving, by the first terminal, a first request that is sent by the first network device and is used for negotiating a DC, where the first request at least includes a DC negotiation parameter; and
sending, by the first terminal, a first response corresponding to the first request to the first network device.

In the foregoing solution, the performing interaction data transmission between the first terminal and the second network device at least based on the first DC includes: performing, by the first terminal, interaction data transmission between the first terminal and the second network device through the first DC; or
sending, by the first terminal, interaction data to the third network device through the first DC, where the interaction data is forwarded to the second network device through the third network device, or, receiving, by the first terminal from the second network device through the first DC, interaction data that is sent by the third network device.

According to a third aspect, the present disclosure further provides in some embodiments a service implementation method, applied to a second network device, including:
performing, by the second network device, interaction data transmission between the second network device and a first terminal at least based on a first DC, where the first DC is established through DC negotiation performed by the first terminal and a first network device.

In the foregoing solution, the first DC is a DC between the first terminal and the second network device; or
the first DC is a DC between the first terminal and a third network device.

In the foregoing solution, the performing, by the second network device, interaction data transmission between the second network device and the first terminal at least based on the first DC includes: performing, by the second network device, interaction data transmission between the second network device and the first terminal through the first DC; or
sending, by the second network device, interaction data to the third network device, where the interaction data is sent to the first terminal through the first DC, or receiving, by the second network device, interaction data forwarded by the third network device, where the interaction data is sent by the first terminal to the third network device through the first DC.

In the foregoing solution, the method further includes: performing, by the second network device, media resource negotiation with the first terminal, and establishing a first channel and/or a second channel between the first terminal and the second network device through the media resource negotiation, where the first channel and/or the second channel is used for transmission of audio and/or video data.

In the foregoing solution, the performing, by the second network device, the media resource negotiation with the first terminal includes:
initiating, by the second network device after receiving a call event, the media resource negotiation with the first terminal.

In the foregoing solution, the method further includes: managing, by the second network device, at least one of the first DC, the first channel, or the second channel.

In the foregoing solution, the performing, by the second network device, interaction data transmission between the second network device and the first terminal at least based on the first DC includes: sending, by the second network device to the first terminal at least through the first DC, interaction data related to content transmitted in the first channel and/or the second channel.

In the foregoing solution, the method further includes: sending, by the second network device, first information to the first network device, where the first information is used for subscribing to a call event.

In the foregoing solution, the method further includes: receiving, by the second network device, a call event sent by the first network device; and
sending, by the second network device, a first message to the first network device, where the first message is used for indicating the first network device to negotiate a DC channel.

According to a fourth aspect, the present disclosure further provides in some embodiments a service implementation apparatus, applied to a first network device, including a first negotiation unit, configured to: perform DC negotiation with a first terminal, and establish a first DC based on a DC negotiation process, where the first DC is used for transmission of interaction data between the first terminal and a second network device.

According to a fifth aspect, the present disclosure further provides in some embodiments a service implementation apparatus, applied to a first terminal, including a second negotiation unit and a first transmission unit,
where the second negotiation unit is configured to: perform DC negotiation with a first network device, and establish a first DC through the DC negotiation; and
the first transmission unit is configured to perform interaction data transmission between the first terminal and a second network device at least based on the first DC.

According to a sixth aspect, the present disclosure further provides in some embodiments a service implementation apparatus, applied to a second network device, including a second transmission unit, configured to perform interaction data transmission between the second network device and a first terminal at least based on a first DC, where the first DC is established by the first terminal and a first network device performing DC negotiation.

According to a seventh aspect, the present disclosure further provides in some embodiments a computer-readable storage medium storing therein a computer program, where the program is configured to be executed by a processor, to implement the steps in the service implementation method in the foregoing first aspect, second aspect, or third aspect in the embodiments of the present disclosure.

According to an eighth aspect, the present disclosure further provides in some embodiments a communication device, including: a memory, a processor, and a computer program stored in the memory and configured to be run by the processor, where the processor is configured to execute the program, to implement the steps in the service implementation method in the foregoing first aspect, second aspect, or third aspect in the embodiments of the present disclosure.

For the service implementation method and apparatus, the communication device, and the storage medium provided in the embodiments of the present disclosure, the method includes: A first network device performs DC negotiation with a first terminal, and establishes a first DC based on a DC negotiation process, where the first DC is used for transmission of interaction data between the first terminal and a second network device. The first terminal performs interaction data transmission between the first terminal and the second network device at least based on the first DC. Through the technical solution in the embodiments of the present disclosure, a reliable and efficient DC negotiation scheme is proposed, and interaction data between a terminal and a second network device is transmitted through a DC (a first DC) established through negotiation. In one aspect, interaction data is transmitted through a first DC newly established through negotiation, a collision between media negotiation and DC negotiation is avoided, and a collision between media data transmission and interaction data transmission is also avoided. In another aspect, transmission of interaction data through the first DC can implement richer interaction functions, thereby greatly improving operation experience of a user.

### BRIEF DESCRIPTION OF THE DRAWINGS

Fig. 1 is a schematic flowchart of a service implementation method according to an embodiment of the present disclosure;
Fig. 2a and Fig. 2b are respectively schematic diagrams of a first DC in a service implementation method according to an embodiment of the present disclosure;
Fig. 3 is another schematic flowchart of a service implementation method according to an embodiment of the present disclosure;
Fig. 4 is yet another schematic flowchart of a service implementation method according to an embodiment of the present disclosure;
Fig. 5 is a schematic flowchart of interaction in a service implementation method according to an embodiment of the present disclosure;
Fig. 6 is another schematic flowchart of interaction in a service implementation method according to an embodiment of the present disclosure;
Fig. 7 is a schematic structural diagram of a service implementation apparatus according to an embodiment of the present disclosure;
Fig. 8 is another schematic structural diagram of a service implementation apparatus according to an embodiment of the present disclosure;
Fig. 9 is yet another schematic structural diagram of a service implementation apparatus according to an embodiment of the present disclosure;
Fig. 10 is a schematic structural diagram of hardware of a communication device according to an embodiment of the present disclosure.

### DETAILED DESCRIPTION

The present disclosure is further described below in detail with reference to the accompanying drawings and specific embodiments.

The technical solution in the embodiments of the present disclosure may be applied to various communication systems, for example, a Global System for Mobile communications (GSM), a Long Term Evolution (LTE) system, a 5^{th} Generation Mobile Communication Technology (5G) system, or the like. Optionally, the 5G system or 5G network may also be referred to as a New Radio (NR) system or an NR system.

For example, the communication device applied to the embodiments of the present disclosure may include a network device and a terminal device (which may also be referred to as a terminal, a communication terminal, or the like). The network device may be a device that communicates with the terminal device. The network device may provide communication coverage for a particular area, and can communicate with a terminal located in the area. Optionally, the network device may be a base station in various communication systems, for example, an evolved NodeB (eNB) in an LTE system, or for another example, a gNodeB (gNB) in a 5G system or an NR system.

It should be understood that a device with a communication function in a network/system in the embodiments of the present disclosure may be referred to as a communication device. The communication device may include a network device and a terminal with a communication function. The network device and the terminal device may be specific devices discussed above. Details are not described herein again. The communication device may further include another device, for example, a network controller, a mobility management entity, or another network entity, in a communication system. This is not limited in the embodiments of the present disclosure.

It should be understood that the terms "system" and "network" herein are often used interchangeably herein. The term "and/or" in this specification describes only an association relationship for describing associated objects and represents that three relationships may exist. For example, A and/or B may represent the following three cases: Only A exists, both A and B exist, and only B exists. In addition, the character "/" herein generally represents an "or" relationship between the associated objects.

The terms such as "first" and "second" in the specification and claims of the present disclosure are only used to distinguish between similar objects, but are not used to describe a specific order or time sequence. It should be understood that the data thus used are interchangeable in appropriate circumstances and that embodiments of the present disclosure described herein, for example, can be implemented in other sequences than those illustrated or described. In addition, the terms "include", "comprise" and any other variants are intended to cover a non-exclusive inclusion. For example, a process, method, system, product or device that includes a series of steps or units not only includes those steps or units specified expressly, but also includes other steps or units that are not specified expressly or are inherent to the process, method, product or device.

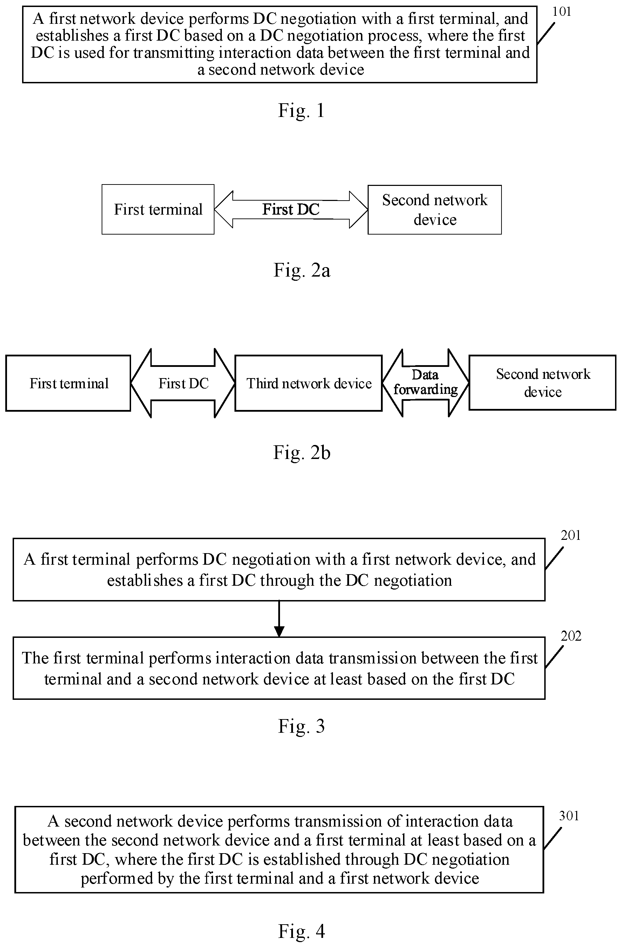

The present disclosure provides in some embodiments a service implementation method. The method is applied to a first network device. Fig. 1 is a schematic flowchart of a service implementation method according to an embodiment of the present disclosure. As shown in Fig. 1, the method includes a step 101.

The step 101 includes: performing, by the first network device, a DC negotiation with a first terminal, and establishing a first DC based on a DC negotiation process, where the first DC is used for transmission of interaction data between the first terminal and a second network device.

In this embodiment, the first network device is a network device at least with a DC negotiation function. Optionally, the first network device may alternatively have at least one of the following functions: DC channel negotiation, DC application management, bootstrap DC management, DC application delivery, and the like. In other embodiments, the first network device may also be referred to as an IP Multimedia Subsystem (IMS) network element, an IMS network capability element, a network capability element, a capability element, or the like. The name of the first network device is not limited in this embodiment. IP stands for Internet Protocol.

For example, the first network device may be, for example, a DC Server, a Voice over LTE Application Server (VOLTE AS), a Multi Media Telephony Application Server (MMTEL AS), an intelligent network element, one independent network element or a combined network element formed by a plurality of network elements in a new call platform. In other implementations, the first network device may be jointly implemented by a Voice over NR (VoNR)+ platform, a new call platform (or an internal platform of a system), and the like.

In some optional embodiments, the performing, by the first network device, the DC negotiation with the first terminal includes: sending, by the first network device, a first request used for negotiating a DC to the first terminal, where the first request at least includes a DC negotiation parameter; and receiving, by the first network device, a first response that is sent by the first terminal and corresponds to the first request.

In this embodiment, the performing, by the first network device, the DC negotiation with the first terminal may be specifically that the first network device sends the first request to the first terminal, where the first request at least carries a negotiated DC negotiation parameter; and after receiving the first request, the first terminal sends the first response to the first network device, indicating that the first terminal agrees with or supports the negotiated DC negotiation parameter, to establish the first DC based on the DC negotiation parameter. Optionally, the first response may include the DC negotiation parameter.

Optionally, the method further includes: associating, by the first network device, the first DC and the second network device through label information in a DC negotiation parameter.

In some optional embodiments of the present disclosure, the performing, by the first network device, the DC negotiation with the first terminal includes: performing, by the first network device, a negotiation of a DC between the first terminal and the second network device with the first terminal; or performing, by the first network device, a negotiation of a DC between the first terminal and a third network device with the first terminal.

For example, the second network device may be specifically a ring back tone platform or a ring back tone system. The ring back tone platform or the ring back tone system can at least be configured to process a ring back tone service, for example, negotiating a media resource of a ring back tone. Optionally, the second network device in the embodiments of the present disclosure may be a service system, which, in addition to being responsible for processing the ring back tone service, may further be responsible for managing audio and video channels, and may further be configured to process interaction data in the embodiments of the present disclosure, and the like. In other implementations, the second network device may be another platform, system, or device configured to process a service (which may be another service other than a ring back tone service in a call process).

In this embodiment, the first DC is a DC between the first terminal and the second network device, as shown in Fig. 2. The interaction data may be transmitted between the first terminal and the second network device through the first DC. Alternatively, the first DC is a DC between the first terminal and the third network device, as shown in Fig. 2b. The first network device and the first terminal negotiate the DC between the first terminal and the second network device, or the DC between the first terminal and the third network device.

In this embodiment, the third network device may be a network device the same as the first network device, or the third network device may be a network device different from the first network device. For example, the first DC between the first terminal and the third network device may be a DC between the first terminal and a media module. The media module is configured to forward and process data in the first DC. The media module may be a module in the first network device. In this case, the third network device may be the same as the first network device. Alternatively, the media module may be separately deployed. In this case, the third network device is a network device different from the first network device.

For example, the third network device may be a DC server, a DC management platform, a new call platform, a Session Border Controller (SBC), or the like, or may be implemented by a VoNR+ media server.

In this embodiment, optionally, the first network device may receive a subscription of the second network device, and perform DC negotiation with the first terminal based on the subscription.

In some optional examples, the method further includes: receiving, by the first network device, first information sent by the second network device, where the first information is used for subscribing to a call event; and sending, by the first network device when receiving the call event, the call event to the second network device, and receiving a first message sent by the second network device, where the first message is used for indicating the first network device to negotiate a DC; and the performing, by the first network device, the DC negotiation with the first terminal includes: triggering, by the first network device, the DC negotiation with the first terminal through the first message.

In this embodiment, the second network device sends the first information to the first network device, where the first information is used for subscribing to the call event. Based on the subscription of the call event, when receiving the call event (for example, a callee ringing message), the first network device sends the call event to the second network device, to notify the second network device of the call event. The second network device sends the first message to the first network device, where the first message is used for indicating the first network device to negotiate a DC. The first network device performs the DC negotiation with the first terminal based on an indication of the first message.

In some other optional embodiments, the first network device may obtain a call control capability in advance, and when receiving a call event (for example, a callee ringing message), trigger the DC negotiation with the first terminal based on the call control capability.

In the embodiments of the present disclosure, the interaction data may be any data related to an interaction function and/or an interaction capability. As some examples, the first terminal may display an interaction interface through an application. The interaction data may be data generated based on an operation when a user performs the operation through the interaction interface and the first terminal detects the operation (which may be referred to as an interaction operation). In this case, the interaction data may be interaction data sent by the first terminal to the second network device. As another example, the interaction data may be interaction data sent by the second network device to the first terminal. For example, after the first terminal sends interaction data to the second network device, the second network device may send content corresponding to or related to the interaction data to the first terminal, and data corresponding to the content may be referred to as interaction data sent by the second network device to the first terminal.

Based on the foregoing embodiments, the present disclosure further provides in some embodiments a service implementation method. The method is applied to a first terminal. Fig. 3 is another schematic flowchart of a service implementation method according to an embodiment of the present disclosure. As shown in Fig. 3, the method includes the following steps 201 and 202.

The step 201 includes: performing, by the first terminal, a DC negotiation with a first network device, and establishing a first DC through the DC negotiation.

The step 202 includes: performing, by the first terminal, interaction data transmission between the first terminal and the second network device at least based on the first DC.

In some optional embodiments, the performing, by the first terminal, the DC negotiation with the first network device includes: receiving, by the first terminal, a first request that is sent by the first network device and is used for negotiating a DC, where the first request at least includes a DC negotiation parameter; and sending, by the first terminal, a first response corresponding to the first request to the first network device.

In this embodiment, the performing, by the first terminal, the DC negotiation with the first network device may be specifically that the first terminal receives the first request that is sent by the first network device and is used for negotiating a DC. In other words, the DC negotiation may be initiated by the first network device. After receiving the first request, the first terminal sends the first response to the first network device, indicating to agree with or support the DC negotiation parameter. Optionally, the first response may include the DC negotiation parameter.

In some optional embodiments, the performing, by the first terminal, the DC negotiation with the first network device includes: performing, by the first terminal, a negotiation of a DC between the first terminal and the second network device with the first network device; or performing, by the first terminal, a negotiation of a DC between the first terminal and a third network device with the first network device.

In this embodiment, the first DC is a DC between the first terminal and the second network device, as shown in Fig. 2. The interaction data may be transmitted between the first terminal and the second network device through the first DC. Alternatively, the first DC is a DC between the first terminal and the third network device, as shown in Fig. 2b. The first network device and the first terminal negotiate the DC between the first terminal and the second network device, or the DC between the first terminal and the third network device.

**In** this embodiment, the third network device may be a network device the same as the first network device, or the third network device may be a network device different from the first network device. For example, the first DC between the first terminal and the third network device may be a DC between the first terminal and a media module. The media module is configured to forward and process data in the first DC. The media module may be a module in the first network device. In this case, the third network device may be the same as the first network device. Alternatively, the media module may be separately deployed. In this case, the third network device is a network device different from the first network device.

**In** some optional embodiments, the performing interaction data transmission between the first terminal and the second network device at least based on the first DC includes: performing, by the first terminal, interaction data transmission between the first terminal and the second network device through the first DC; or sending, by the first terminal, interaction data to the third network device through the first DC, where the interaction data is forwarded to the second network device through the third network device, or, receiving, by the first terminal from the second network device through the first DC, interaction data that is sent by the third network device.

**In** this embodiment, in an example, in a case of negotiating the DC between the first terminal and the second network device, the first DC is the DC between the first terminal and the second network device, as shown in Fig. 2a. The interaction data may be directly transmitted between the first terminal and the second network device through the first DC. In another example, in a case of negotiating the DC between the first terminal and the third network device, the first DC is the DC between the first terminal and the third network device. The transmission between the first terminal and the second network device may include two parts. Transmission may be performed between the first terminal and the third network device through the first DC, and transmission between the third network device and the second network device may be implemented through data forwarding, as shown in Fig. 2b.

In some optional embodiments of the present disclosure, the method further includes: establishing, by the first terminal, a second DC with a third network device, and obtaining a first application through the second DC.

In this embodiment, the third network device has a function of managing a DC application. Optionally, the third network device may be a network device the same as the first network device, or may be a network device different from the first network device.

In this embodiment, the second DC is established between the first terminal and the third network device. The second DC may be, for example, a bootstrap DC. Based on the second DC, the first terminal obtains the first application from the third network device. The first application may be an application related to or associated with a ring back tone service. For example, the first application is a ring back tone application. In other words, the first terminal downloads the ring back tone application from the third network device based on the second DC. In other embodiments, the first application may be another application, for example, an application in a Hyper Text Markup Language (HTML) format. The first terminal may use a browser as the first application.

In some optional embodiments, the method further includes: presenting, by the first terminal, an interaction interface through the first application and/or the interaction data in the first DC.

In this embodiment, the first terminal triggers or starts the first application to present the interaction interface. The interaction interface may display content (or content corresponding to the interaction data) related to the ring back tone service, and/or, the first terminal may present the interaction interface through the interaction data transmitted in the first DC. In other words, content of the interaction data transmitted in the first DC is outputted and displayed through the interaction interface.

In some optional embodiments, the method further includes: associating, by the first terminal, the first DC and the first application.

In this embodiment, the first terminal may associate the first DC with the first application, to display, through the interaction interface of the first application, the interaction data transmitted through the first DC. For example, the first terminal may associate an identifier of the first DC with the first application (or an identifier of the first application), and establish an association relationship between the identifier of the first DC with the first application (or the identifier of the first application), to associate the first DC with the first application.

In some optional embodiments, the method further includes: displaying, by the first terminal, the interaction data through the first application based on an association relationship between the first DC and the first application.

In this embodiment, the first terminal receives the interaction data transmitted through the first DC, and may display the interaction data through the interaction interface of the first application based on the association relationship between the first DC and the first application. For example, after receiving a call event (or a ringing message, a 180 message), the first terminal interacts with the second network device (for example, performs the interaction data transmission at least through the first DC). The first terminal displays data of the interaction data through the interaction interface of the first application.

In some optional embodiments of the present disclosure, the method further includes: performing, by the first terminal, media resource negotiation with the second network device, and establishing a first channel and/or a second channel between the first terminal and the second network device through the media resource negotiation, where the first channel and/or the second channel is used for transmission of audio data and/or video data.

In this embodiment, the media resource negotiation is performed between the first terminal and the second network device. A negotiated media resource is an audio and/or video resource related to the ring back tone service. In some optional embodiments, the first channel may be a channel used for transmission of audio data, and the first channel may also be referred to as an audio channel. The second channel may be used for transmission of video data, and the second channel may also be referred to as a video channel. In some other optional embodiments, the first channel may be a channel used for transmission of audio data and video data, and/or, the second channel may be a channel used for transmission of audio data and video data. Through the establishment of the first channel and/or the second channel, the first terminal may receive media data (audio data and/or video data, for example, ring back tone data) from the second network device, to output or display the media data when receiving a call event (for example, a ringing message), thereby implementing the ring back tone service.

Based on the foregoing embodiments, the present disclosure further provides in some embodiments a service implementation method. Fig. 4 is yet another schematic flowchart of a service implementation method according to an embodiment of the present disclosure. As shown in Fig. 4, the method includes a step 301.

The step 301 includes: performing, by a second network device, interaction data transmission between the second network device and a first terminal at least based on a first DC, where the first DC is established through DC negotiation performed by the first terminal and a first network device.

In this embodiment, before the performing, by the second network device, interaction data transmission between the second network device and the first terminal, the first DC is established in advance. The interaction data is transmitted between the second network device and the first terminal at least through the first DC.

In some optional embodiments, the first DC is a DC between the first terminal and the second network device; or, the first DC is a DC between the first terminal and the first network device.

Optionally, the performing, by the second network device, interaction data transmission between the second network device and the first terminal at least based on the first DC includes: performing, by the second network device, transmission of interaction data forwarded by the first network device between the second network device and the first terminal through the first DC; or sending, by the second network device, interaction data to the first network device, where the interaction data is sent to the first terminal through the first DC, or receiving, by the second network device, interaction data forwarded by the first network device, where the interaction data is sent by the first terminal to a third network device through the first DC.

In this embodiment, the first DC is a DC between the first terminal and the second network device, as shown in Fig. 2. The interaction data may be transmitted between the first terminal and the second network device through the first DC. Alternatively, the first DC is a DC between the first terminal and the third network device, as shown in Fig. 2b. The first network device and the first terminal negotiate the DC between the first terminal and the second network device, or the DC between the first terminal and the third network device.

In this embodiment, the third network device may be a network device the same as the first network device, or the third network device may be a network device different from the first network device. For example, the first DC between the first terminal and the third network device may be a DC between the first terminal and a media module. The media module is configured to forward and process data in the first DC. The media module may be a module in the first network device. In this case, the third network device may be the same as the first network device. Alternatively, the media module may be separately deployed. In this case, the third network device is a network device different from the first network device.

In some optional embodiments of the present disclosure, the method further includes: performing, by the second network device, media resource negotiation with the first terminal, and establishing a first channel and/or a second channel between the first terminal and the second network device through the media resource negotiation, where the first channel and/or the second channel is used for transmission of audio and/or video data.

In this embodiment, the media resource negotiation is performed between the first terminal and the second network device. A negotiated media resource is an audio and/or video resource related to the ring back tone service. In some optional embodiments, the first channel may be a channel used for transmission of audio data, and the first channel may also be referred to as an audio channel. The second channel may be used for transmission of video data, and the second channel may also be referred to as a video channel. In some other optional embodiments, the first channel may be a channel used for transmission of audio data and video data, and/or, the second channel may be a channel used for transmission of audio data and video data. Through the establishment of the first channel and/or the second channel, the first terminal may receive media data (audio data and/or video data, for example, ring back tone data) from the second network device, to output or display the media data when receiving a call event (for example, a ringing message), thereby implementing the ring back tone service.

In some optional embodiments, the performing, by the second network device, the media resource negotiation with the first terminal includes: initiating, by the second network device after receiving a call event, the media resource negotiation with the first terminal.

In this embodiment, after receiving a call event, the second network device may send a first message used for media resource negotiation to the first terminal, where the message may include a media resource negotiation parameter. The media resource negotiation parameter is used for establishing the first channel and/or the second channel. Optionally, the first terminal may send a second message to the second network device. The second message may indicate that the terminal supports or agrees with the media resource negotiation parameter. Optionally, the second message may further include the media resource negotiation parameter.

In some optional embodiments, the method further includes: managing, by the second network device, at least one of the first DC, the first channel, or the second channel.

In this embodiment, the second network device has a function of managing at least one of the first DC, the first channel, or the second channel. For example, the function of managing a channel that the second network device has may at least include at least one of the following functions: creating, updating, releasing, or deleting a channel.

In some optional embodiments, the performing, by the second network device, interaction data transmission between the second network device and the first terminal at least based on the first DC includes: sending, by the second network device to the first terminal at least through the first DC, interaction data related to content transmitted in the first channel and/or the second channel.

In this embodiment, the interaction data transmitted through the first DC may be interaction data related to content transmitted through the first channel and/or the second channel, i.e., interaction data related to content of audio data and/or video data. For example, the data transmitted through the first channel and/or the second channel may be video content, and the interaction data may be data of a degree to which a user likes the video content, for example, "Like" data, and the like. For another example, the data transmitted through the first channel and/or the second channel may be a variety show, and the interaction data may be vote data of a user for the variety show, and the like.

In some optional embodiments of the present disclosure, the method further includes: sending, by the second network device, first information to the first network device, where the first information is used for subscribing to a call event.

In this embodiment, the second network device may subscribe to a call event from the first network device, and trigger DC negotiation with the first terminal based on the subscription.

In some optional examples, the method further includes: receiving, by the second network device, a call event sent by the first network device; and sending, by the second network device, a first message to the first network device, where the first message is used for indicating the first network device to negotiate a DC channel.

In this embodiment, the second network device sends the first information to the first network device, where the first information is used for subscribing to the call event. Based on the subscription of the call event, when receiving the call event (for example, a callee ringing message), the first network device sends the call event to the second network device, to notify the second network device of the call event. The second network device sends the first message to the first network device, where the first message is used for indicating the first network device to negotiate a DC. The first network device performs the DC negotiation with the first terminal based on an indication of the first message.

Through the technical solution in the embodiments of the present disclosure, a reliable and efficient DC negotiation scheme is proposed, and interaction data between a terminal and a second network device is transmitted through a DC (a first DC) established through negotiation. In one aspect, interaction data is transmitted through a first DC newly established through negotiation, a collision between media negotiation and DC negotiation is avoided, and a collision between media data transmission and interaction data transmission is also avoided. In another aspect, transmission of interaction data through the first DC can implement richer interaction functions, thereby greatly improving operation experience of a user. The present disclosure is not limited to an interaction scenario of a ring back tone service, and may further be applicable to an interaction scenario of another service in a call process. For example, the interaction data is displayed through the interaction interface of the first application in the call process, and a user may obtain richer content through the presentation of the interaction interface, or may perform an input operation through an input apparatus of the first terminal, to enable the first terminal obtains the interaction data of the user, and the interaction data is transmitted through the first DC, so that richer and more complex interaction actions can be implemented, thereby greatly improving operation experience of the user.

The service implementation method in the embodiments of the present disclosure is described below with reference to specific examples.

In the following examples, an example in which a first network device is an IMS network element and a second network device is a ring back tone platform is used for description.

### Example 1

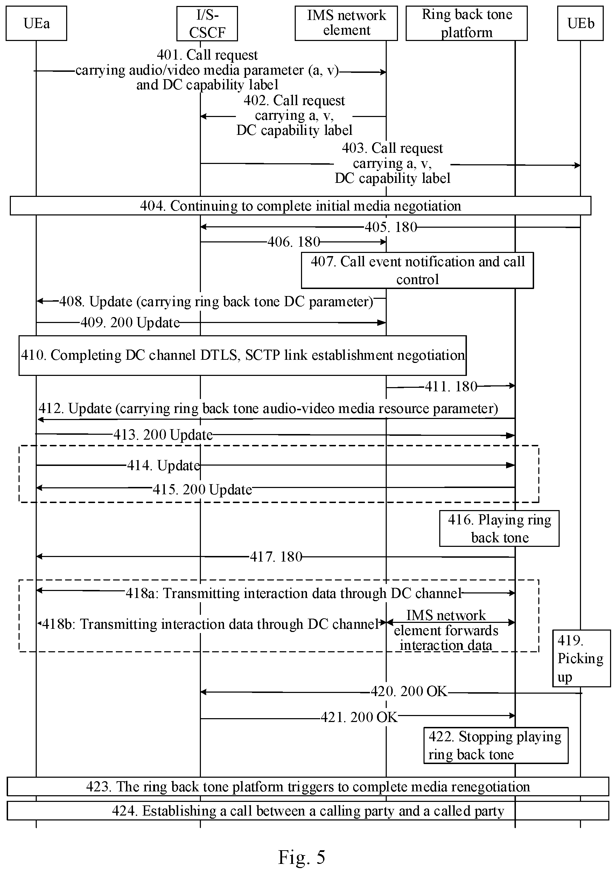

Fig. 5 is a schematic flowchart of interaction of a service implementation method according to an embodiment of the present disclosure. As shown in Fig. 5, the method includes the following steps 401 to 424.

A step 401 and a step 402 include: sending, by UEa, a call request to the IMS network element, where the call request may include an audio-video media parameter (a, v) and a DC capability label, and sending, by the IMS network element, the call request to an Interrogating/Serving Call Session Control Function (I/S-CSCF), where the call request may include the audio-video media parameter a, v and the DC capability label.
a represents an audio media parameter, v represents a video media parameter, and a and v are used for negotiating audio and video channels. The DC capability label can represent a DC capability of UEa, for example, may be used for representing whether UEa supports a DC capability.

In this example, the IMS network element includes a VOLTE AS and a VoNR+ platform, i.e., is jointly implemented by the VOLTE AS and the VoNR+ platform (or an internal platform of a system).

A step 403 includes: sending, by the I/S-CSCF, the call request to UEb, where the call request includes the audio-video media parameter a, v and the DC capability label.

A step 404 includes: continuing, by UEa and UEb, to complete initial media negotiation (or initial media resource negotiation, used for negotiating initial audio and video channels).

A step 405 and a step 406 include: sending, by UEb, a 180 message to the I/S-CSCF, and sending, by the I/S-CSCF, the 180 message to the IMS network element.

A step 407 includes: call event notification and call control.

This step is optional.

The ring back tone platform may subscribe to a call event from the IMS network element. When detecting a call event, the IMS network element sends the call event to the ring back tone platform. The ring back tone platform sends a first message to the IMS network element. The first message is used for indicating the IMS network element to negotiate a DC channel. The IMS network element may trigger DC negotiation with UE through the first message, i.e., trigger to perform a subsequent step 408 and a subsequent step 409.

In other implementations, the IMS network element has a call control capability. When detecting a call event, the IMS network element triggers DC negotiation with a first terminal based on the call control capability.

A step 408 and a step 409 include: sending, by the IMS network element, an update message to UEa, and sending, by UEa, a 200 Update message to the IMS network element.

A DC negotiation process between UEa and the IMS network element is completed in the step 408 and the step 409.

A step 410 includes: completing Datagram Transport Layer Security (DTLS) and Stream Control Transmission Protocol (SCTP) link establishment negotiation for a DC channel between UEa and UEb.

A step 411 includes: sending, by the IMS network element, a 180 message to the ring back tone platform.

The step 410 may be performed in parallel to the sending of the 180 message in the step 411.

A step 412 and a step 413 include: sending, by the ring back tone platform, an update message to UEa, where the update message carries a ring back tone audio-video media resource parameter, and sending, by the UEa, a 200 Update message to the ring back tone platform.

A step 414 and a step 415 include: sending, by UEa, an update message to the ring back tone platform, and sending, by the ring back tone platform, a 200 Update message to UEa.

If resource reservation is completed in a media negotiation process in the step 412 and the step 413, the step 414 and the step 415 are not performed. If resource reservation is not completed in the media negotiation process in the step 412 and the step 413, the media negotiation process is continued in the step 414 and the step 415 to complete resource reservation.

A step 416 and a step 417 include: playing, by the ring back tone platform, a ring back tone, and sending a 180 message to UEa.

A step 418 includes: performing transmission of interaction data between UEa and the ring back tone platform. The step may specifically include the following two manners:

A step 418a includes: directly performing the interaction data transmission between UEa and the ring back tone platform through the established DC.

A step 418b includes: performing, by UEa, the interaction data transmission between the UEa and the IMS network element through the DC, and then performing the interaction data transmission between the UEa and the ring back tone platform through a forwarding function of the IMS network element.

The DC is the first DC in the foregoing embodiments.

A step 419 includes: picking up UEb.

A step 420 to a step 422 include: sending, by UEb, a 200 OK message to the I/S-CSCF, sending, by the I/S-CSCF, the 200 OK message to the ring back tone platform, and stopping, by the ring back tone platform, playing the ring back tone.

A step 423 includes: triggering, by the ring back tone platform, to complete media renegotiation.

A step 424 includes: establishing a call between UEa and UEb.

### Example 2

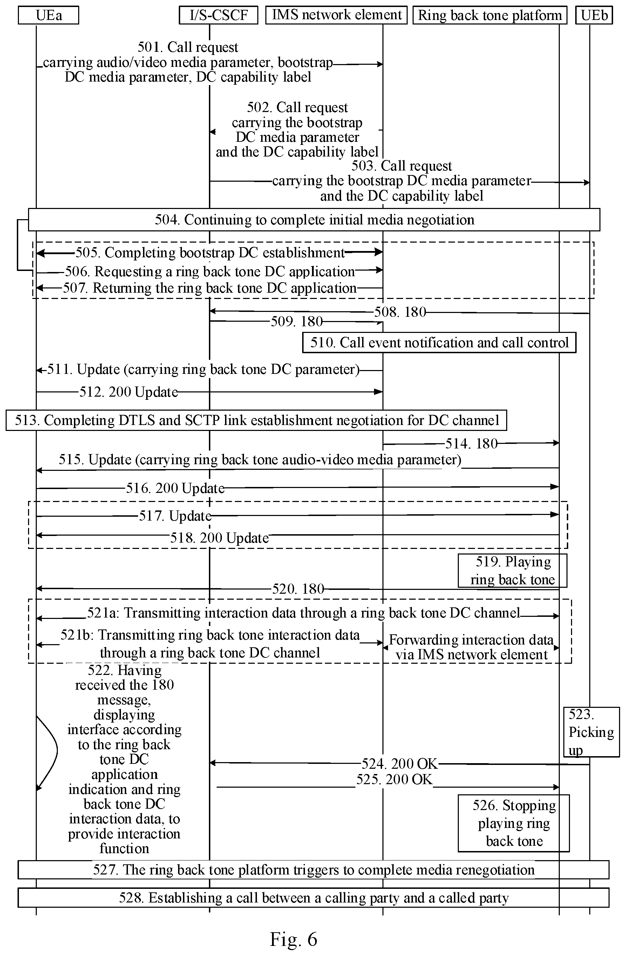

Fig. 6 is another schematic flowchart of interaction of a service implementation method according to an embodiment of the present disclosure. As shown in Fig. 6, the method includes the following steps 501 to 528.

A step 501 and a step 502 include: sending, by UEa, a call request to the IMS network element, where the call request may include an audio-video media parameter, a bootstrap DC media parameter, and a DC capability label, and sending, by the IMS network element, the call request to an I/S-CSCF, where the call request may include the audio-video media parameter, the bootstrap DC media parameter, and the DC capability label.

The DC capability label can represent a DC capability of UEa, for example, may be used for representing whether UEa supports a DC capability.

In this example, the IMS network element includes a VOLTE AS and a VoNR+ platform, i.e., is jointly implemented by the VOLTE AS and the VoNR+ platform (or an internal platform of a system).

A step 503 includes: sending, by the I/S-CSCF, the call request to UEb, where the call request includes the audio-video media parameter a, v and the DC capability label.

A step 504 includes: continuing, by UEa and UEb, to complete initial media negotiation (or initial media resource negotiation, used for negotiating initial audio and video channels).

A step 505 includes: completing establishment of a bootstrap DC between UEa and the IMS network element.

A step 506 and a step 507 include: requesting, by UEa, a ring back tone DC application from the IMS network element through the bootstrap DC, and sending, by the IMS network element, the ring back tone DC application to UEa through the bootstrap DC, to implement download of the ring back tone DC application by UEa.

The step 505 to the step 507 may be performed in parallel to the step 504, and the time order is not limited.

A step 508 and a step 509 include: sending, by UEb, a 180 message to the I/S-CSCF, and sending, by the I/S-CSCF, the 180 message to the IMS network element.

A step 510 includes: call event notification and call control.

This step is optional.

The ring back tone platform may subscribe to a call event from the IMS network element. When detecting a call event, the IMS network element sends the call event to the ring back tone platform. The ring back tone platform sends a first message to the IMS network element. The first message is used for indicating the IMS network element to negotiate a DC channel. The IMS network element may trigger DC negotiation with UE through the first message, i.e., trigger to perform a subsequent step 511 and a subsequent step 512.

In other implementations, the IMS network element has a call control capability. When detecting a call event, the IMS network element triggers DC negotiation with a first terminal based on the call control capability.

A step 511 and a step 512 include: sending, by the IMS network element, an update message to UEa, and sending, by UEa, a 200 Update message to the IMS network element.

A DC negotiation process between UEa and the IMS network element is completed in the step 511 and the step 512.

A step 513 includes: completing DTLS and SCTP link establishment negotiation for a DC channel between UEa and UEb.

A step 514 includes: sending, by the IMS network element, a 180 message to the ring back tone platform.

The step 513 may be performed in parallel to the sending of the 180 message in the step 514.

A step 515 and a step 516 include: sending, by the ring back tone platform, an update message to UEa, where the update message carries a ring back tone audio-video media resource parameter, and sending, by the UEa, a 200 Update message to the ring back tone platform.

A step 517 and a step 518 include: sending, by UEa, an update message to the ring back tone platform, and sending, by the ring back tone platform, a 200 Update message to UEa.

If resource reservation is completed in a media negotiation process in the step 515 and the step 516, the step 517 and the step 518 are not performed. If resource reservation is not completed in the media negotiation process in the step 515 and the step 516, the media negotiation process is continued in the step 517 and the step 518 to complete resource reservation.

A step 519 and a step 520 include: playing, by the ring back tone platform, a ring back tone, and sending a 180 message to UEa.

A step 521 includes: performing transmission of interaction data between UEa and the ring back tone platform. The step may specifically include the following two manners:

A step 521a includes: directly performing the interaction data transmission between UEa and the ring back tone platform through the established DC.

A step 521b includes: performing, by UEa, the interaction data transmission between the UEa and the IMS network element through the DC, and then performing the interaction data transmission between the UEa and the ring back tone platform through a forwarding function of the IMS network element.

The DC is the first DC in the foregoing embodiments.

A step 522 includes: performing, by UEa after receiving the 180 message, interface presentation according to an indication of the ring back tone DC application and in combination with ring back tone DC interaction data, and providing an interaction function.

A step 523 includes: picking up UEb.

A step 524 to a step 526 include: sending, by UEb, a 200 OK message to the I/S-CSCF, sending, by the I/S-CSCF, the 200 OK message to the ring back tone platform, and stopping, by the ring back tone platform, playing the ring back tone.

A step 527 includes: triggering, by the ring back tone platform, to complete media renegotiation.

A step 528 includes: establishing a call between UEa and UEb.

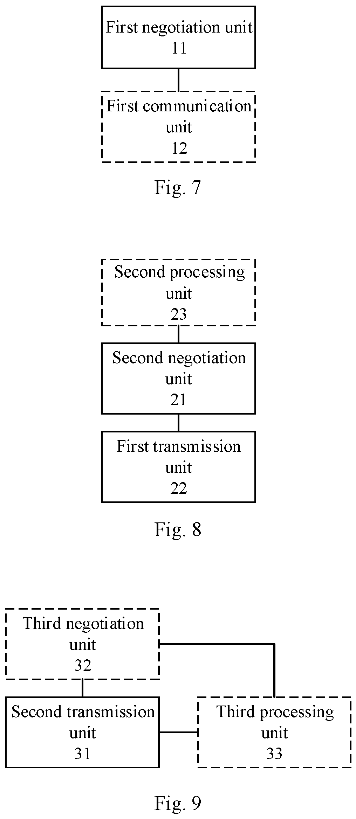

Based on the foregoing embodiments, the present disclosure further provides in some embodiments a service implementation apparatus. The apparatus is applied to a first network device. Fig. 7 is a schematic structural diagram of a service implementation apparatus according to an embodiment of the present disclosure. As shown in Fig. 7, the apparatus includes a first negotiation unit 11, configured to: perform DC negotiation with a first terminal, and establish a first DC based on a DC negotiation process, where the first DC is used for transmission of interaction data between the first terminal and a second network device.

In some optional embodiments of the present disclosure, the first negotiation unit 11 is configured to: perform a negotiation of a DC between the first terminal and the second network device with the first terminal; or perform a negotiation of a DC between the first terminal and a third network device with the first terminal.

In some optional embodiments of the present disclosure, the apparatus further includes a first communication unit 12, configured to receive first information sent by the second network device, where the first information is used for subscribing to a call event; and further configured to: send, when receiving the call event, the call event to the second network device, and receiving a first message sent by the second network device, where the first message is used for indicating the first network device to negotiate a DC channel; and
the first negotiation unit 11 is configured to perform the DC negotiation with the first terminal through the first message.

In some optional embodiments of the present disclosure, the apparatus further includes a first communication unit 12; and the first negotiation unit 11 is configured to: send a first request used for negotiating a DC to the first terminal through the first communication unit 12, where the first request at least includes a DC parameter; and receive a first response that is sent by the first terminal and corresponds to the first request through the first communication unit 12.

In some optional embodiments of the present disclosure, the apparatus further includes a first processing unit, configured to associate the first DC and the second network device through label information in a DC negotiation parameter.

In the embodiments of the present disclosure, the first negotiation unit 11 and the first processing unit in the apparatus may be implemented by a Central Processing Unit (CPU), a Digital Signal Processor (DSP), a Microcontroller Unit (MCU), or a Field-Programmable Gate Array (FPGA) during actual application. The first communication unit 12 in the apparatus may be implemented by a communication module (including: a basic communication suite, an operating system, a communication module, standard interfaces and protocols, and the like) and transmitting and receiving antennas during actual application.

The present disclosure further provides in some embodiments a service implementation apparatus. The apparatus is applied to a first terminal. Fig. 8 is another schematic structural diagram of a service implementation apparatus according to an embodiment of the present disclosure. As shown in Fig. 8, the apparatus includes a second negotiation unit 21 and a first transmission unit 22.

The second negotiation unit 21 is configured to: perform DC negotiation with a first network device, and establish a first DC through the DC negotiation.

The first transmission unit 22 is configured to perform interaction data transmission between the first terminal and a second network device at least based on the first DC.

In some optional embodiments of the present disclosure, the apparatus further includes a second processing unit 23;
the second negotiation unit 21 is further configured to establish a second DC with a third network device; and
the second processing unit 23 is configured to obtain a first application through the second DC.

In some optional embodiments of the present disclosure, the second processing unit 23 is further configured to present, an interaction interface through the first application and/or the interaction data in the first DC.

In some optional embodiments of the present disclosure, the second processing unit 23 is further configured to associate the first DC with the first application.

In some optional embodiments of the present disclosure, the second processing unit 23 is further configured to display the interaction data through the first application based on an association relationship between the first DC and the first application.

In some optional embodiments of the present disclosure, the second negotiation unit 21 is further configured to: perform media resource negotiation with the second network device, and establish a first channel and/or a second channel between the first terminal and the second network device through the media resource negotiation, where the first channel and/or the second channel is used for transmission of audio data and/or video data.

In some optional embodiments of the present disclosure, the second negotiation unit 21 is configured to: perform a negotiation of a DC between the first terminal and the second network device with the first network device; or perform a negotiation of a DC between the first terminal and a third network device with the first network device.

In some optional embodiments of the present disclosure, the apparatus further includes a second communication unit; and the second negotiation unit 21 is configured to: receive, through the second communication unit, a first request that is sent by the first network device and is used for negotiating a DC, where the first request at least includes a DC negotiation parameter; and send a first response corresponding to the first request to the first network device.

In some optional embodiments of the present disclosure, the first transmission unit 22 is configured to: perform transmission of interaction data between the first terminal and the second network device through the first DC; or send interaction data to the third network device through the first DC, where the interaction data is forwarded to the second network device through the third network device, or, receive, through the first DC, from the second network device interaction data that is sent by the third network device.

In the embodiments of the present disclosure, the second negotiation unit 21 and the second processing unit 23 in the apparatus may be implemented by a CPU, a DSP, an MCU, or an FPGA during actual application. The second communication unit and the first transmission unit 22 in the apparatus may be implemented by a communication module (including: a basic communication suite, an operating system, a communication module, standard interfaces and protocols, and the like) and transmitting and receiving antennas during actual application.

The present disclosure further provides in some embodiments a service implementation apparatus. The apparatus is applied to a second network device. Fig. 9 is yet another schematic structural diagram of a service implementation apparatus according to an embodiment of the present disclosure. As shown in Fig. 9, the apparatus includes a second transmission unit 31, configured to perform interaction data transmission between the second network device and a first terminal at least based on a first DC, where the first DC is established through DC negotiation performed by the first terminal and a first network device.

In some optional embodiments of the present disclosure, the first DC is a DC between the first terminal and the second network device; or, the first DC is a DC between the first terminal and a third network device.

In some optional embodiments of the present disclosure, the second transmission unit 31 is configured to: perform transmission of interaction data between the second network device and the first terminal through the first DC; or send interaction data to the third network device, where the interaction data is sent to the first terminal through the first DC, or receive interaction data forwarded by the third network device, where the interaction data is sent by the first terminal to the third network device through the first DC.

In some optional embodiments of the present disclosure, the apparatus further includes a third negotiation unit 32, configured to: perform media resource negotiation with the first terminal, and establish a first channel and/or a second channel between the first terminal and the second network device through the media resource negotiation, where the first channel and/or the second channel is used for transmission of audio and/or video data.

In some optional embodiments of the present disclosure, the third negotiation unit 32 is configured to initiate, after a call event is received, the media resource negotiation with the first terminal.

In some optional embodiments of the present disclosure, the apparatus further includes: a third processing unit 33, configured to manage at least one of the first DC, the first channel, or the second channel.

In some optional embodiments of the present disclosure, the second transmission unit 31 is configured to send, to the first terminal at least through the first DC, interaction data related to content transmitted in the first channel and/or the second channel.

In some optional embodiments of the present disclosure, the apparatus further includes a third communication unit, configured to send first information to the first network device, where the first information is used for subscribing to a call event.

In some optional embodiments of the present disclosure, the third communication unit is further configured to receive a call event sent by the first network device; and further configured to send a first message to the first network device, where the first message is used for indicating the first network device to negotiate a DC channel.

In the embodiments of the present disclosure, the third negotiation unit 32 and the third processing unit 33 in the apparatus may be implemented by a CPU, a DSP, an MCU, or an FPGA during actual application. The third communication unit and the second transmission unit 31 in the apparatus may be implemented by a communication module (including: a basic communication suite, an operating system, a communication module, standard interfaces and protocols, and the like) and transmitting and receiving antennas during actual application.

It should be noted that, when the service implementation apparatus provided in the foregoing embodiments implements a service, division of the foregoing program modules is only used as an example for description. During actual application, the foregoing processing may be allocated to different program modules for implementation as required, to be specific, an inner structure of an apparatus is divided into different program modules, to implement all or some of the processing described above. In addition, the service implementation apparatuses provided in the foregoing embodiments and the embodiments of the service implementation methods belong to a same concept. For specific implementation processes thereof, refer to the method embodiments. Details are not described herein again.

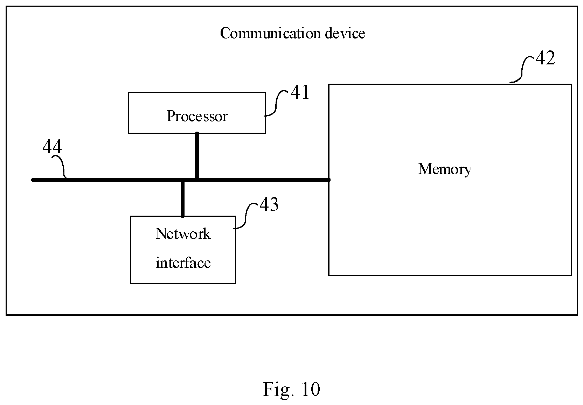

The present disclosure further provides in some embodiments a communication device. The communication device may be the foregoing first network device, first terminal, or second network device. Fig. 10 is a schematic structural diagram of hardware of a communication device according to an embodiment of the present disclosure. As shown in Fig. 10, the communication device includes a memory 42, a processor 41, and a computer program stored in the memory 42 and configured to be run by the processor 41, where the processor 41 is configured to execute the program, to implement the steps in the service implementation method applied to a first network device in the embodiments of the present disclosure; or the processor 41 is configured to execute the program, to implement the steps in the service implementation method applied to a first network device in the embodiments of the present disclosure; or the processor 41 is configured to execute the program, to implement the steps in the service implementation method applied to a second network device in the embodiments of the present disclosure.

Optionally, the communication device further includes one or more communication interfaces 43. The various components in the communication device are coupled together by a bus system 44. It may be understood that the bus system 44 is configured to implement connection and communication among these components. The bus system 44 further includes a power bus, a control bus, and a status signal bus in addition to a data bus. However, for clear description, various buses in Fig. 10 are shown as the bus system 44.

It may be understood that the memory 42 may be a volatile memory or a nonvolatile memory or may include both a volatile memory and a nonvolatile memory. The nonvolatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM) a Flash Memory, a magnetic surface memory, an optical disc, or a Compact Disc Read-Only Memory (CD-ROM). The magnetic surface memory may be a magnetic disk memory or a magnetic tape memory. The volatile storage may be a RAM used as an external cache. Through example but not limitative description, many forms of RAMs may be used, for example, a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDR SDRAM), an Enhanced Synchronous Dynamic Random Access Memory (ESDRAM), a SyncLink Dynamic Random Access Memory (SLDRAM), and a Direct Rambus Random Access Memory (DRRAM). The memory 42 described in the embodiments of the present disclosure intends to include, but not limited to, these and any other appropriate types of memories.

The foregoing method disclosed in the embodiments of the present disclosure may be applied to the processor 41 or implemented by using the processor 41. The processor 41 may be disposed as an integrated circuit chip having a signal processing capability. During implementation, the steps in the foregoing method may be accomplished by hardware integrated logic circuits or instructions in a software form in the processor 41. The processor 41 may be a general-purpose processor, a DSP, or another programmable logic device, a discrete gate or transistor logic device, a discrete hardware component, or the like. The processor 41 may implement or execute the methods, steps, and logic block diagrams disclosed in the embodiments of the present disclosure. The general-purpose processor may be a microprocessor, any conventional processor, or the like. The steps in the method disclosed with reference to the embodiments of the present disclosure may be directly performed and accomplished by a hardware decoding processor or performed and accomplished by a combination of hardware and software modules in a decoding processor. The software module may be located in the storage medium. The storage medium is located in the storage 42. The processor 41 reads information in the storage 42 and accomplishes the steps in the foregoing methods in combination with hardware of the processor.

In exemplary embodiments, the communication device may be implemented by one or more Application-Specific Integrated Circuits (ASICs), DSPs, Programmable Logic Devices (PLDs), Complex Programmable Logic Devices (CPLDs), FPGAs, general-purpose processors, controllers, MCUs, Microprocessors, or other electronic components for performing the foregoing methods.

In exemplary embodiments, the present disclosure further provides in some embodiments a computer-readable storage medium, for example, a memory 42 including a computer program, the computer program is executable by the processor 41 of the communication device to complete the steps in the foregoing methods. The computer-readable storage medium may be a FRAM, a ROM, a PROM, an EPROM, an EEPROM, a Flash Memory, a magnetic surface memory, an optical disc, a CD-ROM, or another memory, or may be various devices including any one or any combination of the foregoing memories.

The present disclosure further provides in some embodiments a computer-readable storage medium storing therein a computer program, where the program is configured to be executed by a processor, to implement the steps in the service implementation method applied to a first network device in the embodiments of the present disclosure; or the program is configured to be executed by a processor, to implement the steps in the service implementation method applied to a first terminal in the embodiments of the present disclosure; or the program is configured to be executed by a processor, to implement the steps in the service implementation method applied to a second network device in the embodiments of the present disclosure.

The methods disclosed in several method embodiments provided in the present disclosure may be arbitrarily combined with each other without causing any conflict to obtain new method embodiments.

The features disclosed in several product embodiments provided in the present disclosure may be arbitrarily combined with each other without causing any conflict to obtain new product embodiments.

The features disclosed in several method or device embodiments provided in the present disclosure may be arbitrarily combined with each other without causing any conflict to obtain new method embodiments or device embodiments.

In several embodiments provided in the disclosure, it should be understood that the disclosed device and method may be implemented in other forms. The described device embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections between the components may be implemented through some interfaces, indirect couplings or communication connections between the apparatuses or units, or electrical connections, mechanical connections, or connections in other forms.

The units described as separate parts may or may not be physically separate, and parts shown as units may or may not be physical units, that is, may be located in one position, or may be distributed on a plurality of network units. Some or all of the units may be selected according to actual needs to achieve the objects of the solutions in the embodiments.

In addition, functional units in the embodiments of the present disclosure may all be integrated into one processing unit, or each of the units may exist alone, or two or more units are integrated into one unit. The integrated unit may be implemented in the form of hardware or a software functional unit in addition to hardware.

A person of ordinary skill in the art may understand that all or part of the steps in implementing the foregoing method embodiments may be accomplished by a program instructing relevant hardware. The foregoing program may be stored in a computer-readable storage medium. The problem, when executed, performs the steps in the foregoing method embodiments. The foregoing storage medium includes various media that can store program code such as a removable storage device, a ROM, a RAM, a magnetic disk, an optical disc, or the like.

Alternatively, when the integrated unit of the present disclosure is implemented in the form of a software functional module and sold or used as an independent product, the integrated unit may be stored in a computer-readable storage medium. Based on such an understanding, the technical solutions of the embodiments of the present disclosure essentially, or the part contributing to the prior art may be implemented in a form of a software product. The computer software product is stored in a storage medium, and includes several instructions for indicating a computer device (which may be a personal computer, a server, or a network device) to perform all or a part of the methods described in embodiments of the present disclosure. The foregoing storage medium includes various media that can store program code such as a removable storage device, a ROM, a RAM, a magnetic disk or an optical disc.

The above descriptions are merely specific implementations of the present disclosure, and the protection scope of the present disclosure is not limited thereto. Any variation or replacement that may be readily figured out by those skilled in the art within the technical scope disclosed by the present disclosure shall fall within the protection scope of the present disclosure. Therefore, the protection scope of the present disclosure shall be defined by the protection scope of the claims.

## Claims

1. A service implementation method, applied to a first network device, comprising:
performing, by the first network device, a data channel (DC) negotiation with a first terminal, and establishing a first DC based on a DC negotiation process, wherein the first DC is used for transmission of interaction data between the first terminal and a second network device.

2. The method according to claim 1, wherein the performing, by the first network device, the DC negotiation with the first terminal comprises:
performing, by the first network device, a negotiation of a DC between the first terminal and the second network device with the first terminal; or
performing, by the first network device, a negotiation of a DC between the first terminal and a third network device with the first terminal.

3. The method according to claim 1, wherein the method further comprises:
receiving, by the first network device, first information sent by the second network device, wherein the first information is used for subscribing to a call event; and
sending, by the first network device when receiving the call event, the call event to the second network device, and receiving a first message sent by the second network device, wherein the first message is used for indicating the first network device to negotiate a DC channel; and
the performing, by the first network device, the DC negotiation with the first terminal comprises:
triggering, by the first network device, the DC negotiation with the first terminal through the first message.

4. The method according to claim 1, wherein the performing, by the first network device, the DC negotiation with the first terminal comprises:
sending, by the first network device, a first request used for negotiating a DC to the first terminal, wherein the first request at least comprises a DC parameter; and
receiving, by the first network device, a first response that is sent by the first terminal and corresponds to the first request.

5. The method according to claim 1, wherein the method further comprises:
associating, by the first network device, the first DC and the second network device through label information in a DC negotiation parameter.

6. A service implementation method, applied to a first terminal, comprising:
performing, by the first terminal, a data channel (DC) negotiation with a first network device, and establishing a first DC through the DC negotiation; and
performing interaction data transmission between the first terminal and a second network device at least based on the first DC.

7. The method according to claim 6, wherein the method further comprises:
establishing, by the first terminal, a second DC with a third network device, and obtaining a first application through the second DC.

8. The method according to claim 7, wherein the method further comprises:
presenting, by the first terminal, an interaction interface through the first application and/or the interaction data in the first DC.

9. The method according to claim 8, wherein the method further comprises:
associating, by the first terminal, the first DC and the first application.

10. The method according to claim 9, wherein the method further comprises:
displaying, by the first terminal, the interaction data through the first application based on an association relationship between the first DC and the first application.

11. The method according to claim 6, wherein the method further comprises:
performing, by the first terminal, media resource negotiation with the second network device, and establishing a first channel and/or a second channel between the first terminal and the second network device through the media resource negotiation, wherein the first channel and/or the second channel is used for transmission of audio data and/or video data.

12. The method according to claim 6, wherein the performing, by the first terminal, the DC negotiation with the first network device comprises:
performing, by the first terminal, a negotiation of a DC between the first terminal and the second network device with the first network device; or
performing, by the first terminal, a negotiation of a DC between the first terminal and a third network device with the first network device.

13. The method according to claim 6, wherein the performing, by the first terminal, the DC negotiation with the first network device comprises:
receiving, by the first terminal, a first request that is sent by the first network device and is used for negotiating a DC, wherein the first request at least comprises a DC negotiation parameter; and
sending, by the first terminal, a first response corresponding to the first request to the first network device.

14. The method according to claim 6 or 12, wherein the performing interaction data transmission between the first terminal and the second network device at least based on the first DC comprises:
performing, by the first terminal, interaction data transmission between the first terminal and the second network device through the first DC; or
sending, by the first terminal, interaction data to the third network device through the first DC, wherein the interaction data is forwarded to the second network device through the third network device, or, receiving, by the first terminal from the second network device through the first DC, interaction data that is sent by the third network device.

15. A service implementation method, applied to a second network device, comprising:
performing, by the second network device, interaction data transmission between the second network device and a first terminal at least based on a first DC, wherein the first DC is established through DC negotiation performed by the first terminal and a first network device.

16. The method according to claim 15, wherein the first DC is a DC between the first terminal and the second network device; or
the first DC is a DC between the first terminal and a third network device.

17. The method according to claim 15 or 16, wherein the performing, by the second network device, interaction data transmission between the second network device and the first terminal at least based on the first DC comprises:
performing, by the second network device, interaction data transmission between the second network device and the first terminal through the first DC; or
sending, by the second network device, interaction data to the third network device, wherein the interaction data is sent to the first terminal through the first DC, or receiving, by the second network device, interaction data forwarded by the third network device, wherein the interaction data is sent by the first terminal to the third network device through the first DC.

18. The method according to claim 15, wherein the method further comprises:
performing, by the second network device, media resource negotiation with the first terminal, and establishing a first channel and/or a second channel between the first terminal and the second network device through the media resource negotiation, wherein the first channel and/or the second channel is used for transmission of audio and/or video data.

19. The method according to claim 18, wherein the performing, by the second network device, the media resource negotiation with the first terminal comprises:
initiating, by the second network device after receiving a call event, the media resource negotiation with the first terminal.

20. The method according to claim 18, wherein the method further comprises:
managing, by the second network device, at least one of the first DC, the first channel, or the second channel.

21. The method according to claim 18 or 20, wherein the performing, by the second network device, interaction data transmission between the second network device and the first terminal at least based on the first DC comprises:
sending, by the second network device to the first terminal at least through the first DC, interaction data related to content transmitted in the first channel and/or the second channel.

22. The method according to claim 15, wherein the method further comprises:
sending, by the second network device, first information to the first network device, wherein the first information is used for subscribing to a call event.

23. The method according to claim 22, wherein the method further comprises:
receiving, by the second network device, a call event sent by the first network device; and
sending, by the second network device, a first message to the first network device, wherein the first message is used for indicating the first network device to negotiate a DC channel.

24. A service implementation apparatus, applied to a first network device, comprising a first negotiation unit, configured to: perform data channel (DC) negotiation with a first terminal, and establish a first DC based on a DC negotiation process, wherein the first DC is used for transmission of interaction data between the first terminal and a second network device.

25. A service implementation apparatus, applied to a first terminal, comprising a second negotiation unit and a first transmission unit,
wherein the second negotiation unit is configured to: perform data channel (DC) negotiation with a first network device, and establish a first DC through the DC negotiation; and
the first transmission unit is configured to perform interaction data transmission between the first terminal and a second network device at least based on the first DC.

26. A service implementation apparatus, applied to a second network device, comprising a second transmission unit, configured to perform interaction data transmission between the second network device and a first terminal at least based on a first DC, wherein the first DC is established by the first terminal and a first network device performing DC negotiation.

27. A computer-readable storage medium storing therein a computer program, wherein the program is configured to be executed by a processor, to implement the steps in the method according to any one of claims 1 to 5; or
the program is configured to be executed by a processor, to implement the steps in the method according to any one of claims 6 to 14; or
the program is configured to be executed by a processor, to implement the steps in the method according to any one of claims 15 to 23.

28. A communication device, comprising: a memory, a processor, and a computer program stored in the memory and configured to be run by the processor, wherein the processor is configured to execute the program, to implement the steps in the method according to any one of claims 1 to 5; or
the processor is configured to execute the program, to implement the steps in the method according to any one of claims 6 to 14; or
the processor is configured to execute the program, to implement the steps in the method according to any one of claims 15 to 23.
